# EUROPEAN PATENT SPECIFICATION

(11) **EP 1 696 383 B1**
(45) Date of publication and mention of the grant of the patent: **18.06.2008**
(21) Application number: 05258049.5
(22) Date of filing: 23.12.2005
(51) Int. Cl.: G06T 5/00, G06T 3/00

(54) **Automatic perspective distortion detection and correction for document imaging**
Automatische Detektion und Korrektur von Perspektivenverzerrung für Dokumentabbildungen
Détection et correction automatiques de la distorsion de perspective pour l'imagerie documentaire

(30) Priority: 25.02.2005 CA 2498484; 17.03.2005 US 82588
(43) Date of publication of application: 30.08.2006
(60) Divisional application: 07018531.9
(73) Proprietor: Psion Teklogix Systems Inc., Mississauga, Ontario L5N 7J9 (CA)
(72) Inventor: Orhun, Ufuk, Ottawa, Ontario K2H 7C8 (CA)
(74) Representative: Richardson, Mark Jonathan

(56) References cited:
- EP-A- 0 944 259
- EP-A- 1 274 231
- WO-A-01/58128
- DE-A1- 4 331 188
- US-A- 5 813 771
- US-B1- 6 671 423
- SMITH C E ET AL: "GRASPING OF STATIC AND MOVING OBJECTS USING A VISION-BASED CONTROL APPROACH" PROCEEDINGS OF THE 1995 IEEE/RSJ INTERNATIONAL CONFERENCE ON INTELLIGENT ROBOTS AND SYSTEMS. IROS 95. HUMAN ROBOT INTERACTION AND COOPERATIVE ROBOTS. PITTSBURGH, AUG. 5 - 9, 1995, PROCEEDINGS OF THE IEEE/RSJ INTERNATIONAL CONFERENCE ON INTELLIGENT RO, vol. VOL. 1, 5 August 1995 (1995-08-05), pages 329-334, XP000740909 ISBN: 0-7803-3006-4
- PATENT ABSTRACTS OF JAPAN vol. 2003, no. 12, 5 December 2003 (2003-12-05) & JP 2004 281468 A (YAMAHA MOTOR CO LTD), 7 October 2004 (2004-10-07)

## Description

### FIELD OF INVENTION

The present invention relates generally to the field of image readers, and more particularly to a method and apparatus for correcting perspective distortions and orientation errors.

### BACKGROUND OF THE INVENTION

The use of portable image readers over fixed-mount image readers is increasing and these portable image readers are seeing applications in many industries. One of the main challenges with portable image readers however is the perspective distortion caused by inconsistent image reading positions. With fixed-mount systems, such as a document scanner, the image reader is placed in such a manner that the optical path of the image reader is perpendicular to the image plane. With portable systems, however, the position of the image reader is dependent on a human operator. It is difficult for an operator to know the ideal point from where to capture an image of a target such as a document. More often than not, the user captures the image at an oblique angle, i.e. the image reader is not in a plane parallel to the plane of the document, and the captured image is skewed.

Accordingly, the image data may be uploaded to a personal computer for processing by various correction algorithms. The algorithms are employed to correct the distortion effects associated with off-angle images of documents. The correction algorithms require a user to manually identify the corners of a region of a captured image. Many image readers use geometric transforms such as affine transformations during post-processing of the image to correct for perspective distortions. In order to apply these transforms, the edges or corners of the image need to be defined. By measuring the spatial displacement of the identified corners from desired positions associated with a rectangular arrangement, an estimation of the amount of distortion is calculated. The correction algorithm then processes the imaged document to possess the desired perspective and size as necessary.

U.S. Patent Applications 2003/0156201 - Zang published August 21, 2003; 2004/0012679 - Fan published January 22, 2004 and 2004/0022451- Fugimoto published February 5, 2004 discuss automatic methods for identifying the corner or edges of the document based on statistical models. While these methods do not require user input to manually identify the document corners, additional complexity is added to the image reader. Also, the degree of accuracy is not the same when the locations of the corners are estimated positions. A document can also contain many different types of objects such as 1 or 2-dimensional codes, text, written signatures, etc. As a result it may be difficult to define the boundaries of the document by statistical methods.

Further, the prior art accounts for correction of perspective distortion, but cannot correct for orientation. The operator may not always align the image reader in the same orientation as the document so the captured image may require rotation. Many image readers have rectangular aspect ratios so it is necessary at times to rotate the image reader by 90 degrees with respect to the document in order to "fill" the field of view (FOV) of the image reader with the document.

Therefore there is a need for an image reader that can automatically correct for both perspective distortion and orientation.

### SUMMARY OF THE INVENTION

The present invention is directed to a method and apparatus for positioning an image reader having a rectangular field of view to avoid perspective distortion in a captured image wherein the captured image has special boundary markers located at the corners of the image having a rectangular shape. The image reader is positioned by capturing an image, calculating the distances between the special boundary markers and the field of view corners and determining if the distances are all the same within a predetermined tolerance. If the distances are not the same the image reader is repositioned by the operator and the image recaptured until the distances are all the same within the predetermined tolerance. Further, the special boundary markers may include a unique identifier marker different from the other special boundary markers, which is used to correct orientation errors in the captured image.

The invention is further directed to a method and apparatus for producing an image of a rectangular target having special boundary markers at the corners with one of the markers being a unique corner marker. The image is produced by capturing an image using an image reader having a rectangular field of view, positioning the reader as a function of the distances from the markers to corners of the field of view and correcting orientation errors of the image using the unique corner marker. Orientation errors may be corrected by rotating the captured image. Further, perspective distortion may be corrected using the special boundary markers.

In accordance with another aspect of this invention, orientation errors in the image may be corrected by rotating the captured image.

In accordance with a specific aspect of this invention, the special boundary markers are polygon shapes.

Other aspects and advantages of the invention, as well as the structure and operation of various embodiments of the invention, will become apparent to those ordinarily skilled in the art upon review of the following description of the invention in conjunction with the accompanying drawings.

### BRIEF DESCRIPTION OF THE DRAWINGS

The invention will be described with reference to the accompanying drawings, wherein:
Figure 1 is a simplified diagram of an image reader;
Figure 2 shows how perspective distortion is caused;
Figure 3 shows the results of applying an automatic perspective detection and correction method to an image with perspective distortion;
Figure 4 is a flowchart outlining the process steps of an example useful for understanding the present invention;
Figure 5 shows an example of unique document markers;
Figure 6 shows how the smallest rectangle is determined as part of the perspective distortion correction algorithm;
Figure 7 is a flowchart outlining the process steps of an embodiment of the present invention; and
Figure 8 is a simplified diagram on an image reader employing the algorithms of the present invention.

### DETAILED DESCRIPTION

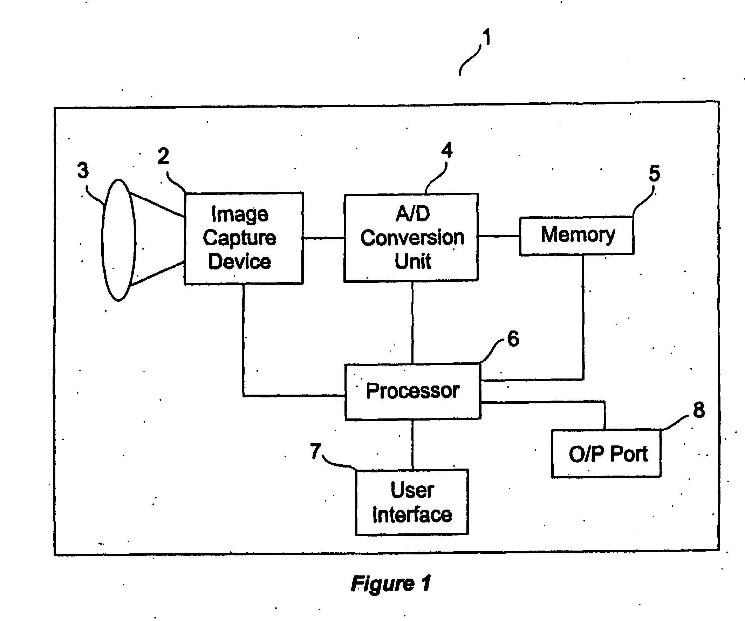

A conventional image reader, such as a portable image reader **1** is shown in the simplified diagram of Figure 1. It comprises an image capture device **2,** such as a CCD or CMOS image sensor, an optical system **3** mounted over the image sensor, an analog-to-digital (A/D) conversion unit **4,** memory **5,** processor **6,** user interface **7** and output port **8.**

The analog information produced by image capture device **2** is converted to digital information by A/D conversion unit **4.** A/D conversion unit **4** may convert the analog information received from image capture device **2** in either a serial or parallel manner. The converted digital information may be stored in memory **5** (e.g., random access memory or flash memory). The digital information is then processed by processor **6.** Additionally or alternatively, other circuitry (not shown) may be utilized to process the captured image such as an application specific integrated circuit (ASIC). User interface **7** (e.g., a touch screen, keys, and/or the like) may be utilized to edit the captured and processed image. The image may then be provided to output port **8.** For example, the user may cause the image to be downloaded to a personal computer (not shown) via output port **8.**

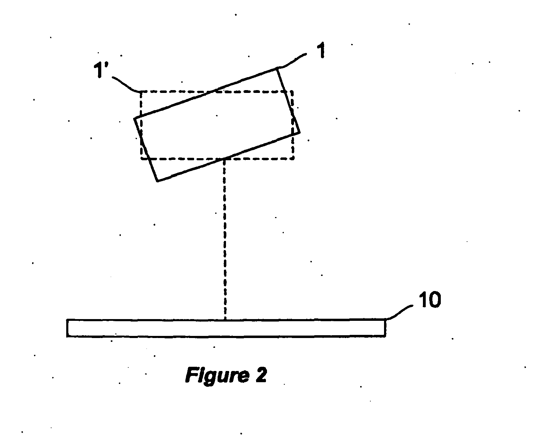

Figure 2 shows diagrammatically how perspective distortion is caused. Image reader **1'** shown in dotted lines shows it in the correct position over a target **10** such as a document to ensure distortion-free imaging. In practice, the position of image reader **1** is as shown in solid lines. Image reader **1** is shown at an oblique angle with respect to document **10.** Since the optical path of image reader **1** is not directly perpendicular with surface of document **10**, perspective distortion will result.

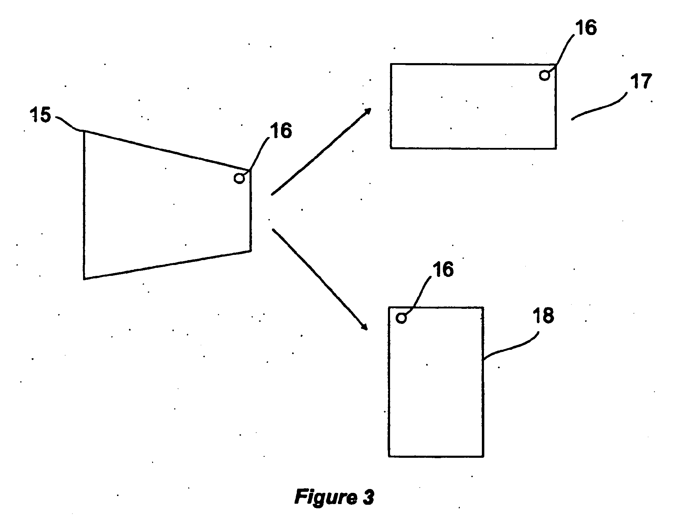

Figure 3 shows the results of applying a method useful for understanding the present invention to an image suffering from perspective distortion. Captured image **15** is a skewed image of a document. A marker **16** on the document indicates the location of the upper left hand corner of the document. In applying the present method to captured image **15**, the automatic perspective detection and correction method of the present example produces a processed image **17.** The distortion is removed from processed image **17,** but marker **16,** which indicates the upper left hand corner of the document, shows that processed image **17** is not oriented correctly. If perspective distortion correction and orientation correction are applied together, the result is processed image **18.** Marker **16** of processed image **18** correctly indicates the upper left hand corner of the document, thus confirming correct orientation.

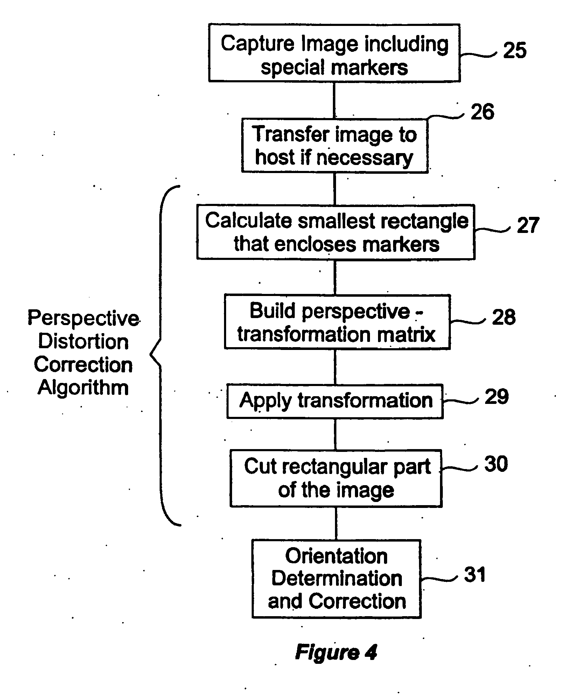

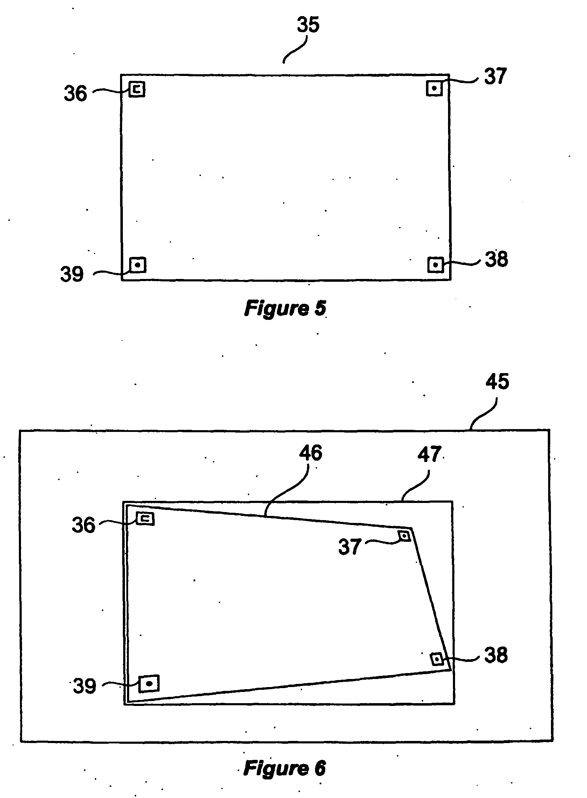

Figure 4 shows a flowchart outlining an example useful for understanding the present invention. The first step of the process is to capture **25** an image of the target such as a document **35** including special markers **36, 37, 38** and **39** as shown on figure 5. The special markers **36, 37, 38** and **39** are included on the document **35** to identify the four corners of the document boundary. Three markers **37, 38** and **39** out of the four markers **36, 37, 38** and **39** are identical, while a fourth marker **36** indicates a particular corner for example, the upper left hand corner. This is used as an orientation reference marker. The markers **36**, **37, 38** and **39** in the present example are polygon forms such as squares, circles or triangles. The markers **36, 37, 38** and **39** should be unique enough so that they are not confused with other objects on the document. A document template would include these special markers **36, 37, 38** and **39** and as a result all documents to be imaged will have the special markers. It should be understood by those skilled in the art that any number or shape of markers falls within the present invention.

Figure 5 shows a specific example of a document template **35** having four special markers **36, 37, 38** and **39.** Any targets that would need to be read such as one or two-dimensional codes, text or hand-written signatures would be transposed onto the document template and would be bounded by the four special markers **36, 37, 38** and **39.** In the first embodiment of the present invention, the four special markers **36, 37, 38** and **39** define the boundary of the target in the document. These markers define the corners of a rectangle that encompasses the target. Those skilled in the art will realize that any number of markers forming any polygon defining the target may be implemented while still falling within the scope of the present invention. In figure 5, the four markers all include a square, but whereas markers **37, 38** and **39** all contain dots, marker **36** contains a three-line segment. This marker **36** uniquely identifies the upper left hand corner of document **35**. If this document is captured by an image reader and marker **36** appears on the bottom left hand corner, it will be evident that a rotation is required to correct the orientation.

Referring to step **25** of figure 4 again, as the operator attempts to read an image, the image reader projects a targeting pattern onto the target image. This targeting pattern indicates to the operator either the center of, or the boundary of the image reader's FOV. The operator may need to move the image reader back and forth in front of the image so that the image reader can detect all of the special markers **36, 37, 38** and **39.** Detection is done through pattern recognition software. The image reader will read all objects within its field of view until it identifies the special markers **36, 37, 38** and **39.** Since these markers **36, 37, 38** and **39** are located along the periphery of the document, any object that appears similar to the markers, but is located in the center of the document, will be discarded. As soon as the image reader detects the four special markers **36, 37, 38** and **39,** it will give feedback to the operator in the form of a visual indicator such as a light-emitting diode (LED) or an audible signal. Upon receiving the feedback, the operator can capture **25** the image. Since these markers **36, 37, 38** and **39** are necessary for the perspective distortion correction, the process cannot continue if they are not all detected. After image capture and special marker detection, the image and marker locations are transferred **26** to the host such as a personal computer for image processing. The image reader can also do the processing, if this capability is present.

Once it is established that all markers are present on the captured image, correction of the captured image begins. The first step of the perspective correction algorithm is to calculate **27** the smallest rectangle that encloses all the markers of the captured image. Figure 6 shows a diagram of determining the smallest rectangle. Boundary **45** defines the FOV of the image reader as well as the boundary of the captured image. Document **46** located within boundary **45** suffers from perspective distortion. Markers **36, 37, 38** and **39** define the corners or boundaries of document **46.** Based on the locations of these markers **36, 37, 38** and **39,** the smallest rectangle that encloses them is defined by rectangle **47**. The corrected image will have an area defined by rectangle **47.**

The second step of the perspective correction algorithm is to build **28** a perspective transformation matrix that will map the markers of the captured image to the corresponding corners of the smallest rectangle. This requires the use of geometric transforms such as affine transformations. This technique is known to those skilled in the art and will not be discussed further here.

The third step of the perspective correction algorithm is to apply **29** the transformation, which will move the markers of the captured image to the corners of the smallest rectangle that encloses the captured image. The last step of the correction algorithm is to cut **30** the rectangular part of the image, the part of the image defined by the smallest rectangle, from the rest of the captured image. This rectangular image is then made the principal image. In reference to Figure 6, the image defined by rectangle **47** is cut away from the image area defined by boundary **45.** The image area defined by rectangle **47** becomes the principal image. This reduces the image size thus taking up less space in memory and making transmission of the image, such as to a host, much easier.

The final step in the process outlined in Figure 4 is to determine **31** if rotation is required **31.** This determination is based on the location of the upper left-hand corner marker **36,** the orientation reference marker. The location of this marker **36** in any other corner other than the predetermined orientation reference corner marker, the upper left one, for example, indicates that rotation is required. The orientation reference marker is not limited to upper-left hand corner. Other corners can be envisioned while still falling within the scope of the present invention.

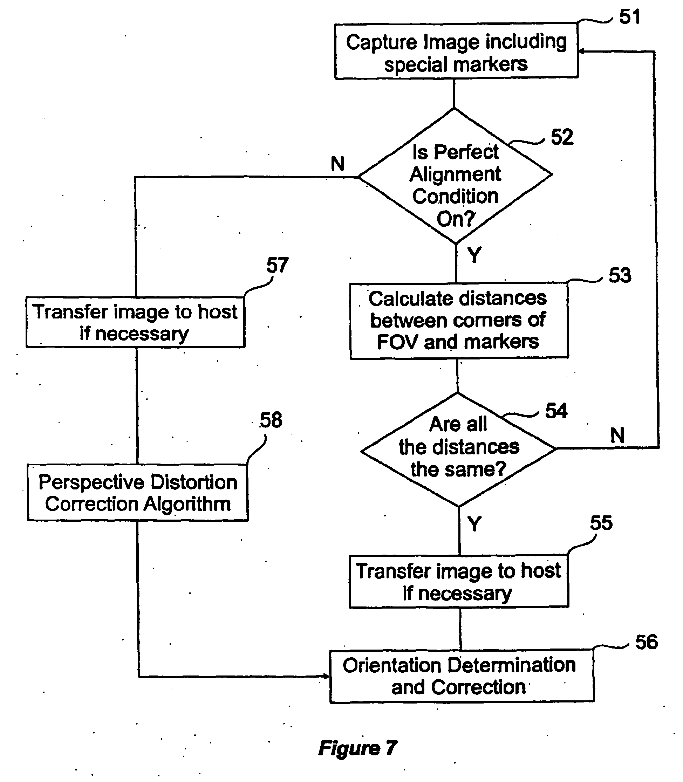

A further embodiment of the present invention incorporates perspective distortion detection that will reduce or may even eliminate the need for perspective distortion correction. This is done by determining a perfect alignment condition in which to capture the image. If the user can be guided as to how to correctly align the image reader over the target, perspective distortion in the resultant image can be avoided. Figure 7 outlines the process for this embodiment of the present invention. The first step of capturing **51** the image including special markers **36, 37, 38** and **39** is similar to the first step of Figure 4. Once all the special markers **36, 37, 38** and **39** are detected, feedback is given to the operator to capture **51** the image.

The next step of the process is to determine if the perfect alignment condition is switched on or enabled **52** in the image reader. If it is enabled, the next step **53** calculates the distance between the corners of the FOV **45** and the markers **36, 37, 38** and **39,** i.e. the distance between the upper left hand corner of the FOV **45** and the upper left hand marker **36** and so on. Once the distances are measured for each of the four corners, the algorithm determines **54** if the distances between each marker and the corresponding FOV corner are all the same. If they are all the same, or within a predetermined tolerance to each other, the image is considered to be distortion free and the process continues to step **55.** In this case, the image reader will provide "positive" feedback to the operator such as a LED indicator or an audible signal. If the distances are not all the same, the image reader will provide "negative" feedback, to indicate to the operator that distortion exists in the captured image and to re-capture the image. The algorithm then returns to step **51**. This feedback is meant to guide the operator to manually correct the image reader alignment. This can be done through a number of ways such as left/right and/or top/bottom LED indicators. If the image reader needs to be moved in a particular direction, the appropriate LED will illuminate. Another option is the use of audible tones. As the operator moves the image reader, the tones can indicate if the operator is approaching proper alignment or increasing the amount of distortion.

Step **55** transfers the image to a host processor such as a personal computer for image processing. Step **55** is optional if the capability is present for the image reader itself to perform any post-processing.

The last step of this process is orientation determination and correction **56**. Upon examination of the location of the orientation reference corner marker, the image may require rotation.

If it was determined that the perfect alignment condition was turned off or disabled in step **52,** the image is transferred **57** to a host processor for image processing. This step is optional if the post-processing capability is present on the image reader. The next step is to correct **58** for perspective distortion by implementing the perspective distortion correction algorithm outlined in figure 4. Once the image has been corrected for distortion, the orientation determination and correction algorithm is applied **56**.

It is also to be noted that it is within the present scope of this invention to correct **58** to correct the image for perspective distortion after step **55.** This would be particularly desirable to correct for the minor perspective distortion permitted by the tolerances in step **54**.

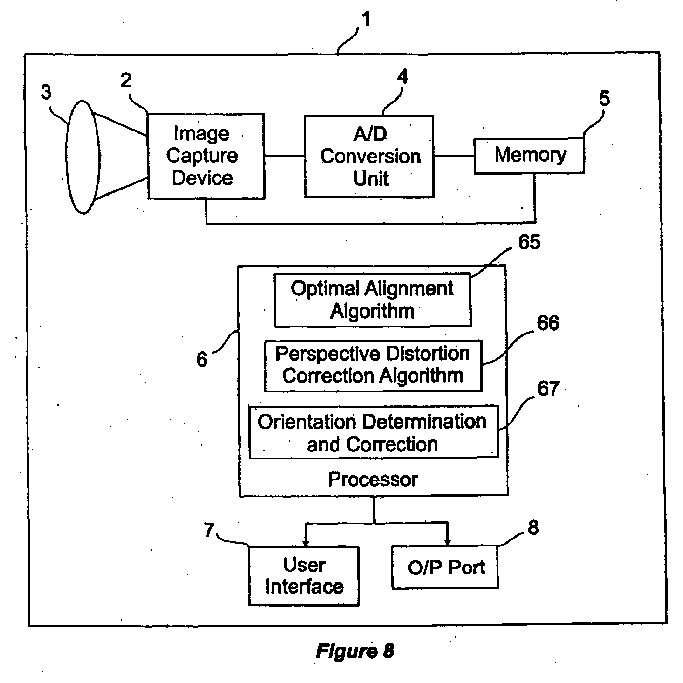

Figure 8 shows the diagram of an image reader **1** of Figure 1, but further including the algorithms of the present invention. Assuming that the captured image is not transferred to a host and the image reader **1** itself does the post-processing, the processor **6** of Figure 8 includes the algorithms of the present invention. These include the optimal alignment algorithm **65** outlined in Figure 7 and the perspective distortion correction algorithm **66** outlined in Figure 4. If the optimal alignment condition is enabled, algorithm **65** is applied. If it is disabled, the perspective distortion correction algorithm **66** is applied.

From the embodiment and examples described above, the present invention has the advantage of being simpler than the prior art by avoiding complex corner/edge detecting algorithms. The accuracy is also higher since the corners of the document are identifiable by the special markers, whereas the prior art uses statistical methods to provide an estimate of the document corners.

A further advantage of the present invention is the detection of perspective distortion, which gives feedback to the operator for correct positioning of the image reader. Perspective distortion correction may not be necessary if the operator can be guided into capturing a distortion-free image.

While the invention has been described according to what is presently considered to be the most practical and preferred embodiments, it must be understood that the invention is not limited to the disclosed embodiments. Those ordinarily skilled in the art will understand that various modifications and equivalent structures and functions may be made without departing from the scope of the invention as defined in the claims. Therefore, the invention as defined in the claims must be accorded the broadest possible interpretation so as to encompass all such modifications and equivalent structures and functions.

## Claims

1. A method of positioning an image reader having a rectangular field of view to avoid perspective distortion in a captured image wherein the captured image has special boundary markers located at the corners of the image having a rectangular shape comprising the steps of:
a. capturing an image;
b. calculating the distances between the special boundary markers and the field of view comers;
c. determining if the distances are all the same within a predetermined tolerance; and
d. repositioning the image reader and recapturing the image if the distances are not the same within the predetermined tolerance;
e. repeating steps b., c. and d. until the distances are all the same within the predetermined tolerance.

2. The method as claimed in claim 1 wherein the special boundary markers include a unique identifier marker different from the other special boundary markers and the method comprises:
f. correcting for orientation errors in the captured image based on the unique marker identifier.

3. A method of producing an image of a rectangular target having special boundary markers at the corners with one of the markers being a unique corner marker using an image reader having a rectangular field of view comprising the steps of:
a. capturing an image;
b. positioning the reader as a function of the distances from the markers to corners of the field of view; and
c. correcting orientation errors of the image using the unique corner marker.

4. The method as claimed in claim 3 comprising before step c. correcting perspective distortion on the captured image using the special boundary markers.

5. The method as claimed in anyone of claims 3 or 4 wherein the correcting orientation errors step comprises rotating the captured image.

6. The method as claimed in any preceding claim wherein the special boundary markers are polygon shapes

7. An apparatus for positioning an image reader having a rectangular field of view to avoid perspective distortion in a captured image wherein the captured image has special boundary markers located at the corners of the image having a rectangular shape comprising:
- means for capturing an image;
- means for calculating the distance between the special boundary markers and the field of view comers;
- means for determining if the distances are all the same within a predetermined tolerance;
- means for recapturing the image until the distances are all the same within a predetermined tolerance; and
- means for indicating when the distances are all the same within a predetermined tolerance.

8. The apparatus as claimed in claim 7 wherein the special boundary markers include a unique identifier marker different from the other special boundary markers and the apparatus comprises means for correcting for orientation errors in the captured image based on the unique marker identifier.

9. An apparatus for producing an image of a rectangular target having special boundary markers at the corners with one of the markers being a unique corner marker using an image reader having a rectangular field of view comprising
- means for capturing an image;
- means for providing an indication to position the reader as a function of the distances from the markers to corners of the field of view; and
- means for correcting orientation errors of the image using the unique corner marker.

10. The apparatus as claimed in claim 9 comprising means for correcting perspective distortion on the captured image using the special boundary markers.

11. The apparatus as claimed in anyone of claims 8 or 9 wherein the means for correcting orientation errors comprises means for rotating the captured image.

12. The apparatus as claimed in any one of claims 7 to 11 wherein the special boundary markers are polygon shapes.

## Patentansprüche

1. Vorrichtung zum Positionieren eines Bildlesegeräts mit einem rechteckigen Blickfeld, um eine perspektivische Verzerrung in einem erfassten Bild zu vermeiden, wobei das erfasste Bild an den Ecken des Bildes spezielle Grenzmarkierungen mit einer rechteckigen Gestalt aufweist, umfassend die folgenden Schritte :
a. Erfassen eines Bildes;
b. Berechnen der Abstände zwischen den speziellen Grenzmarkierungen und den Blickfeldecken;
c. Bestimmen, ob die Abstände alle gleich sind innerhalb einer vorbestimmten Toleranz; und
d. Neupositionieren des Bildlesegeräts und erneutes Erfassen des Bildes, wenn die Abstände nicht die gleichen innerhalb der vorbestimmten Toleranz sind;
e. Wiederholen der Schritte b., c. und d., bis die Abstände alle die gleichen innerhalb der vorbestimmten Toleranz sind.

2. Verfahren nach Anspruch 1, wobei die speziellen Grenzmarkierungen eine eindeutige Kennzeichnungsmarkierung enthalten, die von den anderen speziellen Grenzmarkierungen verschieden ist, und das Verfahren Folgendes umfaßt:
f. Korrigieren von Orientierungsfehlern in dem erfassten Bild auf der Basis der eindeutigen Kennzeichnungsmarkierung.

3. Verfahren zum Herstellen eines Bildes eines rechteckigen Ziels mit speziellen Grenzmarkierungen in den Ecken, wobei eine der Markierungen eine eindeutige Eckenmarkierung ist, unter Verwendung eines Bildlesegeräts mit einem rechteckigen Blickfeld, umfassend die folgenden Schritte:
a. Erfassen eines Bildes
b. Positionieren des Lesegeräts als Funktion der Abstände von den Markierungen zu Ecken des Blickfelds und
c. Korrigieren von Orientierungsfehlern des Bildes unter Verwendung der eindeutigen Eckenmarki erung.

4. Verfahren nach Anspruch 3, umfassend vor Schritt c. das Korrigieren einer perspektivischen Verzerrung an dem erfassten Bild unter Verwendung der speziellen Grenzmarkierungen.

5. Verfahren nach einem der Ansprüche 3 oder 4, wobei der Schritt des Korrigierens von Orientierungsfehlern das Drehen des erfassten Bildes umfaßt.

6. Verfahren nach einem der vorhergehenden Ansprüche, wobei die speziellen Grenzmarkierungen Polygonformen sind.

7. Vorrichtung zum Positionieren eines Bildlesegeräts mit einem rechteckigen Blickfeld, um eine perspektivische Verzerrung in einem erfassten Bild zu vermeiden, wobei das erfasste Bild an den Ecken des Bildes spezielle Grenzmarkierungen mit einer rechteckigen Gestalt aufweist, umfassend:
- Mittel zum Erfassen eines Bildes;
- Mittel zum Berechnen des Abstands zwischen den speziellen Grenzmarkierungen und den Blickfeldecken;
- Mittel zum Bestimmen, ob die Abstände alle innerhalb einer vorbestimmten Toleranz liegen;
- Mittel zum Neuerfassen des Bildes, bis die Abstände alle die gleichen innerhalb einer vorbestimmten Toleranz sind; und
- Mittel zum Anzeigen, wenn die Abstände alle die gleichen innerhalb einer vorbestimmten Toleranz sind.

8. Vorrichtung nach Anspruch 7, wobei die speziellen Grenzmarkierungen eine eindeutige Kennzeichnungsmarkierung enthalten, die von den anderen speziellen Grenzmarkierungen verschieden ist, und die Vorrichtung Mittel umfaßt zum Korrigieren von Orientierungsfehler in dem erfassten Bild auf der Basis der eindeutigen Kennzeichnungsmarkierung.

9. Vorrichtung zum Erzeugen eines Bildes eines rechteckigen Ziels mit speziellen Grenzmarkierungen in den Ecken, wobei eine der Markierungen eine eindeutige Eckenmarkierung ist, unter Verwendung eines Bildlesegeräts mit einem rechteckigen Blickfeld, umfassend:
- Mittel zum Erfassen eines Bildes;
- Mittel zum Bereitstellen einer Anzeige zum Positionieren des Lesegeräts als Funktion der Abstände von den Markierungen zu Ecken des Blickfelds und
- Mittel zum Korrigieren von Orientierungsfehlern des Bildes unter Verwendung der eindeutigen Eckenmarkierung.

10. Vorrichtung nach Anspruch 9, umfassend Mittel zum Korrigieren einer perspektivischen Verzerrung an dem erfassten Bild unter Verwendung der speziellen Grenzmarkierungen.

11. Vorrichtung nach einem der Ansprüche 8 oder 9, wobei das Mittel zum Korrigieren von Orientierungsfehlern Mittel zum Drehen des erfassten Bildes umfaßt.

12. Vorrichtung nach einem der Ansprüche 7 bis 11, wobei die speziellen Grenzmarkierungen Polygonformen sind.

## Revendications

1. Procédé pour positionner un lecteur d'image ayant un champ de vision rectangulaire pour empêcher une distorsion de perspective dans une image saisie, dans lequel l'image saisie comporte des marqueurs de limite spéciaux situés aux coins de l'image ayant une forme rectangulaire, comprenant les étapes consistant à :
a. saisir une image ;
b. calculer les distances entre les marqueurs de limite spéciaux et les coins du champ de vision ;
c. déterminer si les distances sont toutes les mêmes dans une tolérance prédéterminée ; et
d. repositionner le lecteur d'image et ressaisir l'image si les distances ne sont pas les mêmes dans la tolérance prédéterminée ;
e. répéter les étapes b., c. et d. jusqu'à ce que les distances soient toutes les mêmes dans la tolérance prédéterminée.

2. Procédé selon la revendication 1, dans lequel les marqueurs de limite spéciaux comportent un marqueur identifiant spécifique différent des autres marqueurs de limite spéciaux et le procédé comprend :
f. la correction des erreurs d'orientation de l'image saisie, basée sur le marqueur identifiant spécifique.

3. Procédé de réalisation d'une image d'une cible rectangulaire comportant des marqueurs de limite spéciaux aux coins, l'un des marqueurs étant un marqueur de coin spécifique, en utilisant un lecteur d'image ayant un champ de vision rectangulaire comprenant les étapes consistant à :
a. saisir une image;
b. positionner le lecteur en fonction des distances des marqueurs de limite spéciaux jusqu'aux coins du champ de vision ; et
c. corriger les erreurs d'orientation de l'image en utilisant le marqueur de coin spécifique.

4. Procédé selon la revendication 3, comprenant, avant l'étape c., la correction de la distorsion de perspective sur l'image saisie, en utilisant les marqueurs de limite spéciaux.

5. Procédé selon l'une quelconque des revendications 3 ou 4, dans lequel l'étape de correction des erreurs d'orientation comprend la rotation de l'image saisie.

6. Procédé selon l'une quelconque des revendications précédentes, dans lequel les marqueurs de limite spéciaux ont des formes polygonales.

7. Dispositif pour positionner un lecteur d'image ayant un champ de vision rectangulaire pour empêcher une distorsion de perspective dans une image saisie, dans lequel l'image saisie comporte des marqueurs de limite spéciaux situés aux coins de l'image ayant une forme rectangulaire, comprenant :
- des moyens pour saisir une image ;
- des moyens pour calculer les distances entre les marqueurs de limite spéciaux et les coins du champ de vision ;
- des moyens pour déterminer si les distances sont toutes les mêmes dans une tolérance prédéterminée ;
- des moyens pour ressaisir l'image jusqu'à ce que les distances soient toutes les mêmes dans une tolérance prédéterminée ; et
- des moyens pour indiquer le moment où les distances sont toutes les mêmes dans une tolérance prédéterminée.

8. Dispositif selon la revendication 7, dans lequel les marqueurs de limite spéciaux comportent un marqueur identifiant spécifique différent des autres marqueurs de limite spéciaux et le dispositif comprend des moyens pour corriger les erreurs d'orientation de l'image saisie, en se basant sur le marqueur identifiant spécifique.

9. Dispositif pour réaliser une image d'une cible rectangulaire comportant des marqueurs de limite spéciaux aux coins, l'un des marqueurs étant un marqueur de coin spécifique, en utilisant un lecteur d'image ayant un champ de vision rectangulaire, comprenant :
- des moyens pour saisir une image ;
- des moyens pour fournir une indication pour positionner le lecteur en fonction des distances des marqueurs de limite spéciaux jusqu'aux coins du champ de vision ; et
- des moyens pour corriger les erreurs d'orientation de l'image en utilisant le marqueur de coin spécifique.

10. Dispositif selon la revendication 9, comprenant des moyens pour corriger la distorsion de perspective sur l'image saisie, en utilisant les marqueurs de limite spéciaux.

11. Dispositif selon l'une quelconque des revendications 8 ou 9, dans lequel les moyens pour corriger les erreurs d'orientation comprennent des moyens pour faire tourner l'image saisie.

12. Dispositif selon l'une quelconque des revendications 7 à 11, dans lequel les marqueurs de limite spéciaux ont des formes polygonales.
